# EUROPEAN PATENT SPECIFICATION

(11) **EP 1 085 606 B1**
(45) Date of publication and mention of the grant of the patent: **06.04.2005**
(21) Application number: 00308125.4
(22) Date of filing: 18.09.2000
(51) Int. Cl.: G06K 7/00

(54) **Stacked smart card reader assembly**
Chipkartenleser-Vorrichtung
Assemblage d'un lecteur de cartes à puce

(30) Priority: 17.09.1999 US 154444 P
(43) Date of publication of application: 21.03.2001
(73) Proprietor: Thomas & Betts International, Inc., Sparks, Nevada 89434 (US)
(72) Inventor: McDowell, Jennifer L., Cordova, TN 38018 (US); McDowell, Ronald W., Cordova, TN 38018 (US)
(74) Representative: Howick, Nicholas Keith

(56) References cited:
- EP-A- 1 039 406
- US-A- 4 688 864
- US-A- 5 679 007

## Description

The present application claims priority to U.S. Serial No. 60/154,444, filed September 17, 1999, and entitled "Stacked Smart Card Reader".

### FIELD OF THE INVENTION:

The present invention relates generally to an apparatus that electrically connects at least one integrated circuit (IC) card to a printed circuit board (PCB). More particularly, the present invention is directed to a modular IC card connector that accommodates insertion of multiple IC cards therein while preserving essential PCB real estate.

### BACKGROUND OF THE INVENTION:

In correlation with an increasing demand for diminutive electronic devices capable of multipurpose performance, the electronic industry has seen growth in the use of flat plastic cards incorporating computer chips therein. These chip or IC cards are also commonly referred to as "smart cards" and incorporate at least one electronic component to which electrical connection must be made. Smart cards, which often have compact size and shape corresponding to conventional credit and money-access cards, also include at least one contact pad defined on a surface thereof that establishes electrical connection to the electronic components of a printed circuit board (PCB). Smart cards are particularly adapted for use in industries requiring strict billing control and convenient access to money and information. Such applications include public phones, vending machines, copy machines, laundromat machines and portable devices such as mobile phones, pagers, laptop computers and similar electronic devices. Such cards can also be used in applications relating to health services, ticketing, security access and machine controls. In this disclosure, the terms "IC card", "chip card" and "smart card" will be used interchangeably to denote integrated circuit cards of this type.

In order to effect electrical connection between a smart card and a PCB, an electrical connector or smart card reader is employed such that the connector securably accommodates the smart card therein. The connector serves as an interface between a smart card and a reading system that interprets the information contained in the card.

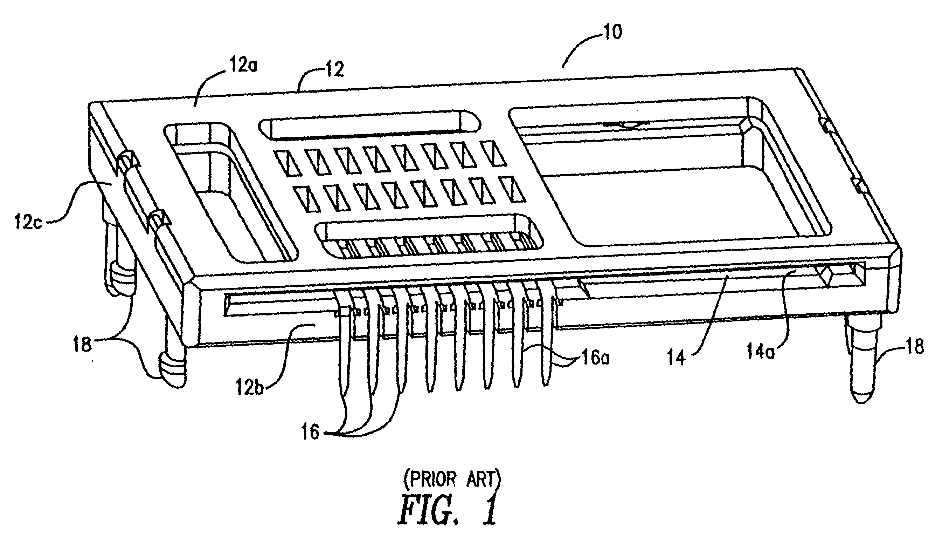

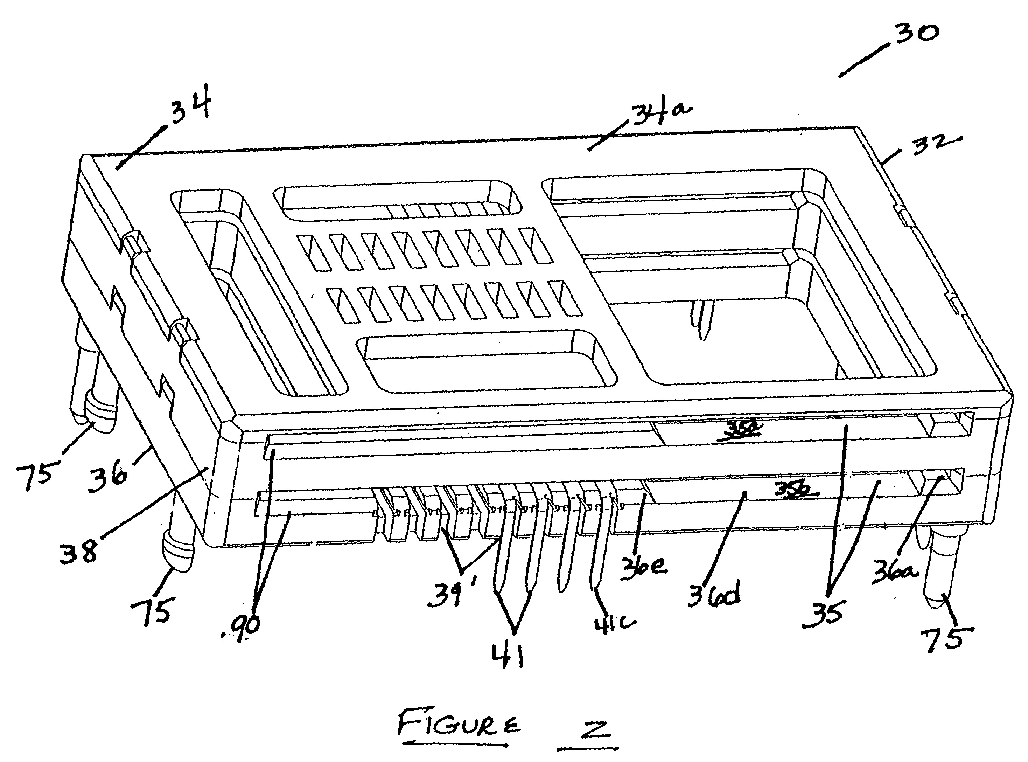

The art has utilized numerous electrical connectors specifically designed for use in removably connecting various types of smart cards. An illustrative example of a conventional smart card reader is provided in Figure 1, wherein a smart card connector 10 includes a housing 12 fabricated from an insulative plastic and having a top portion 12a and a bottom portion 12b having dimensions circumscribed by a peripheral side wall 12c. Top portion 12a and bottom portion 12b together define a linear card insertion slot 14 having ingress 14a through which a smart card enters connector 10. Ingress 14a is generally sized and shaped to correspond to a smart card that is inserted therethrough.

Bottom portion 12b supports a plurality of electrical contacts 16 for electrical engagement with a contact pad of a smart card inserted thereagainst. Contacts 16 lie outwardly from a midsection of bottom portion 12b and have tail portions 16a that extend normally relative to peripheral wall 12c. Bottom portion 12b further includes one or more securement members 18 protruding from a bottom surface thereof for alignment and securement of connector 10 with a PCB. In order to ensure sufficient termination of contacts 16 to the PCB, bottom portion 12b is positioned flush therewith.

Although the aforedescribed connector effectively establishes electrical contact between a smart card and a PCB, its use is limited to accommodation of only a single smart card therein. In many instances, multiple smart cards are required for connection to a PCB to accommodate multiple functions. In order to accommodate plural cards, it has been necessary to incorporate multiple distinct connectors. The use of multiple connectors, however, requires significantly more PCB real estate to accommodate additional connector contacts and the greater surface area they would subsequently occupy. Such limitations inhibit the use of the device within crowded PCB configurations, thereby contributing to increased costs associated with the manufacture of such reading devices. The use of multiple connectors further increases the cost of a smart card device and increases the size of the device, detracting from the attractiveness of the device as a diminutive and versatile electronic tool.

It is therefore desired to provide a smart card connector that mechanically secures a plurality of smart cards therewithin and establishes electrical communication between contacts on such cards and a PCB upon which the connector is supported. Such a connector achieves such mechanical and electrical coupling while preserving valuable PCB real estate.

### SUMMARY OF THE INVENTION:

It is an advantage of the present invention to provide a smart card connector for insertable accommodation of at least one smart card therein.

It is another advantage of the present invention to provide a compact electrical connector for electrically connecting multiple smart cards to a printed circuit board.

It is another advantage of the present invention to provide a smart card connector that supports a smart card for movement into mechanical and electrical communication with contacts supported by the connector.

It is yet another advantage of the present invention to provide a smart card connector that optimizes available PCB space by enabling placement of additional cards within the connector.

It is still another advantage of the present invention to provide a modular smart card connector that utilizes existing components of a single smart card connector, thereby reducing manufacturing costs and wastes and relieving the need for extensive component storage.

In the efficient attainment of these and other advantages, the present invention provides an electrical connector for connecting contact pads of multiple IC cards to a printed circuit board. The present invention is directed to the problem of electrical apparatus packaging, wherein it is desirable to optimize use of available space to accommodate more functions, and thereby more components, in the apparatus. The present invention addresses the need to increase the available packaging space in the device to accommodate improvements thereof.

The present invention provides a stacked smart card reader assembly for connecting one or more contact pads of at least one IC card to conductive elements defined on a printed circuit board (PCB). The assembly includes an insulative base positioned on the PCB and an assembly cover positioned in overlying spaced parallel relationship therewith. A modular center portion is positioned in parallel relationship between the base and the cover and affixed thereto to define at least one card insertion ingress at a front portion of the connector. The ingress is sized and shaped to accommodate linear sliding insertion of a smart card along a card insertion plane defined therealong.

The connector base supports a plurality of electrical contacts therein wherein each contact includes an inner extent having a spring-like undulation at a freely deflectable interior extent positioned in the card insertion plane. Upon card insertion, at least one contact pad on the card engages the interior extent such that the undulation deflects into a corresponding recess defined within the connector lid. Upon retraction of the card from the connector, the undulation resiliently returns to its original position in the card insertion plane. Each contact further includes an outer extent that protrudes normally from the connector lid for termination to the PCB. The contacts are desirably distributed in even and aligned rows that enable placement of all contacts in the connector lid.

### BRIEF DESCRIPTION OF THE DRAWINGS:

Figure 1 is a front perspective view of a smart card connector of the prior art having a single slot for accommodation of a smart card therein.
Figure 2 is a front perspective view of a stacked smart card reader assembly of the present invention.
Figure 3 is a rear perspective view of the stacked smart card reader assembly of Figure 2.
Figure 4 is a bottom perspective view of an assembly cover of the stacked smart card reader assembly of Figures 2 and 3.
Figure 5 is a top perspective view of a modular center portion of the stacked smart card reader assembly of Figures 2 and 3.
Figure 5A is a perspective view of a contact employed as a contact switch in the stacked smart card assembly of the present invention.
Figure 6 is a rear perspective view of a connector base of the stacked smart card reader assembly of Figures 2 and 3.
Figure 7 is a front perspective view of the stacked smart card reader assembly of Figures 2 and 3 having a pair of smart cards inserted therewithin.
Figure 7A is a top view of the stacked smart card reader assembly of the present invention having a smart card inserted therein and a portion of the smart card extending therefrom.

### DETAILED DESCRIPTION OF THE PREFERRED EMBODIMENTS

The present invention provides a stacked smart card connector that establishes an electrical connection between at least one contact pad of at least one IC card and corresponding conductive elements of a printed circuit board. The connector includes an insulative housing having a base that supports a plurality of electrical contacts therein. An assembly cover is positioned in overlying spaced parallel relationship with the base, and a modular center portion is attachably positioned in parallel relationship between the base and the cover to define more than one card insertion slot for simultaneous sliding receipt of a smart card within each slot. In order to conserve space in the area surrounding a printed circuit board, and therefore facilitate the transfer of an increased amount of information, an improved connector assembly is therefore provided that permits mechanical and electrical connection of multiple smart cards within a stacked connector assembly.

Now referring to the figures, wherein like elements are identically numbered, the stacked smart card connector assembly of the present invention can now be described.

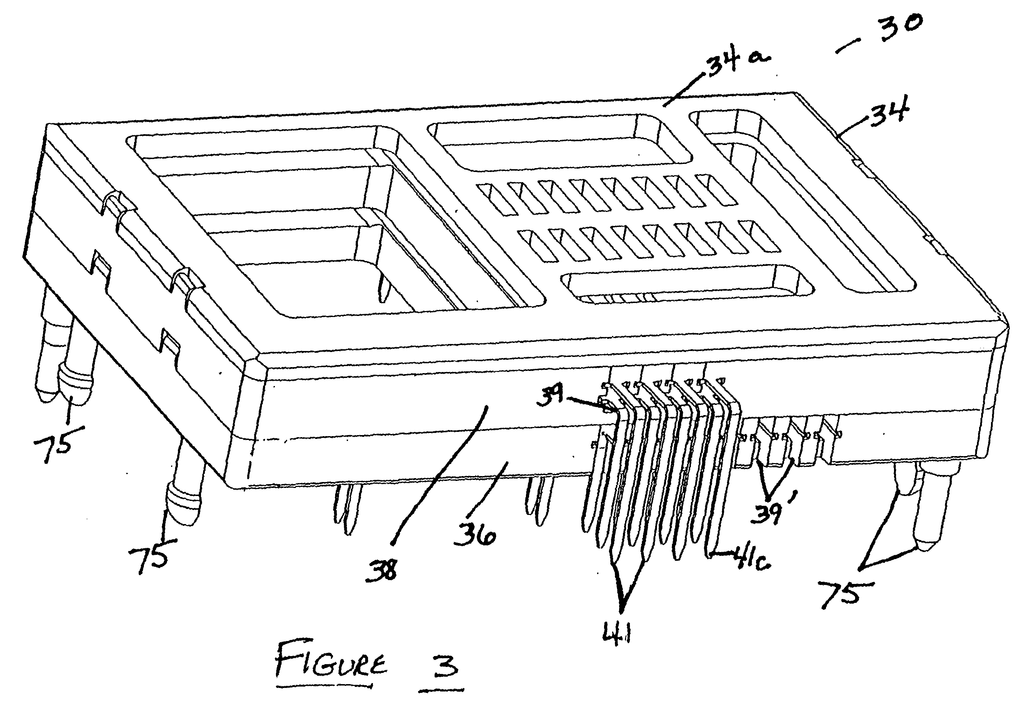

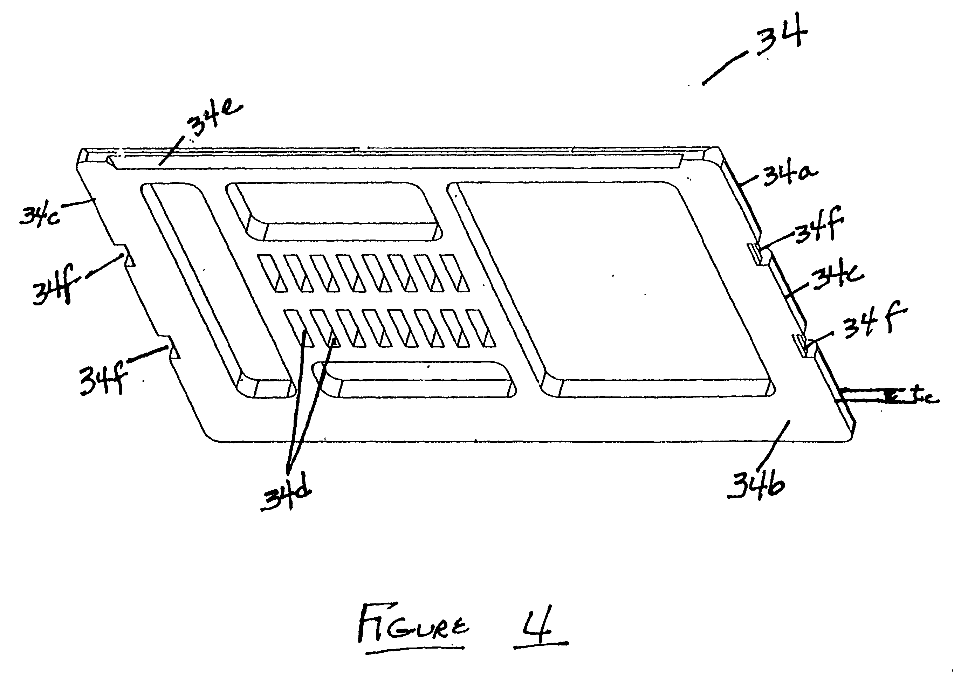

A stacked smart card connector 30 of the present invention is provided in Figures 2 and 3. Connector 30 includes a housing 32 having a connector base 36 and an assembly cover 34 positioned in overlying spaced parallel relationship therewith, each being molded from an insulative plastic. A modular center portion 38, also molded from an insulative plastic, is positioned in parallel relationship between base 34 and cover 36 to define at least a pair of vertically spaced, generally parallel card insertion slots 35 within which a smart card is linearly inserted along a card insertion plane. As illustrated, center portion 38 helps to define at least two card insertion slots 35, with an upper slot 35a being defined between assembly cover 34 and center portion 38 and a lower slot 35b being defined between center portion 38 and base 36. A card insertion ingress 90 defined by housing 32 is in communication with and bounds a frontmost portion of each slot. Ingress 90 is sized and shaped to accept a correspondingly configured smart card therewithin. Smart card connector configurations that employ comparable card insertion techniques are disclosed in commonly assigned United States Patent No 6106317.

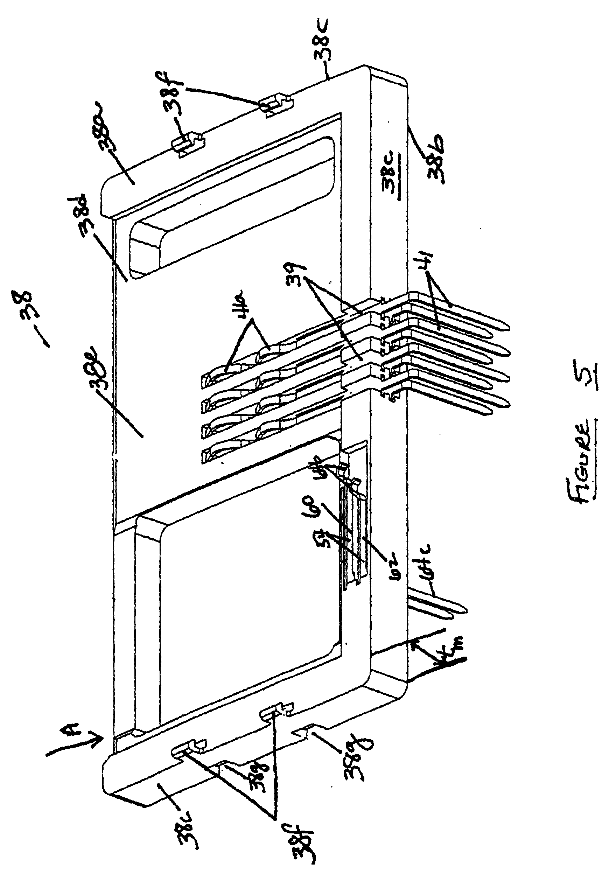

As further shown in Figure 4, assembly cover 34 is a generally rectangular member defined by a substantially planar upper surface 34a opposed by a substantially planar bottom surface 34b. A perimetrical sidewall 34c is coextensive with upper surface 34a and bottom surface 34b to define a cover thickness t_{c}. A plurality of contact receptacles 34d extends through cover 34 between upper surface 34a and lower surface 34b are defined. Receptacles 34d enable visual confirmation of correspondingly positioned electrical contacts supported in center portion 38 (as further described hereinbelow). In addition, a trough 34e is defined along a front portion of side wall 34c that, in combination with center portion 38, defines card insertion ingress 90 upon assembly of cover 34 and center portion 38.

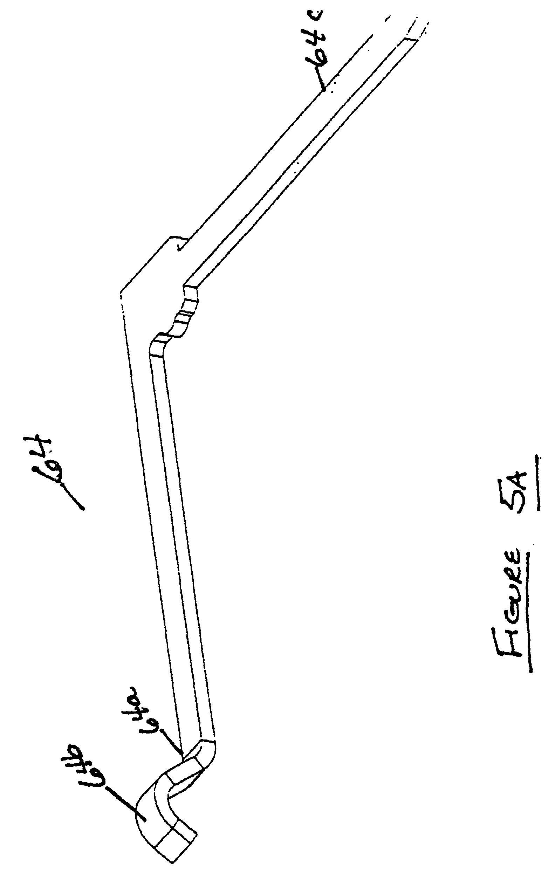

Referring further to Figure 5, modular center portion 38 is also a generally rectangular member having a substantially planar upper surface 38a opposed by a substantially planar bottom surface 38b. A perimetrical sidewall 38c is coextensive with upper surface 38a and bottom surface 38b to define a thickness tₘ. An indenture 38d is formed in upper surface 38a. Indenture 38d has a floor 38c that defines a card insertion plane along which a smart card is slidingly accommodated. A plurality of recesses 39 are provided in floor 38e and extend through center portion 38 so as to accommodate receipt of a plurality of electrical contacts 41 therein. Contacts 41 are supported by center portion 38 in aligned even distribution to effect proper mechanical and electrical engagement with contact pads of a smart card inserted thereagainst.

Each contact 41 includes an interior contact extent 41a having a freely deflectable spring-like undulation 41a defined thereat for electrical engagement with the contact pad of a smart card inserted thereagainst. Each contact 41 further includes an exterior contact extent 41b for termination to the PCB. Each recess 39 accommodates deflection of a corresponding undulation 41a upon insertion of a smart card in card insertion slots 35. Recesses 39 accommodate any number of contacts in a row and may also be designed to accommodate additional rows of contacts.

Center portion 38 further supports a contact switch device 54. Switch device 54 includes a proximate switch 60 which contacts an edge of a smart card upon insertion thereof into indenture 38d and an adjacent switch 62 that is adjacent proximate switch 60. An illustrative embodiment of a contact configuration 64 employed by switches 60 and 62 is further shown in Figure 5A, wherein an engagement extremity 64a has a deflectable undulation 64b defined thereat for engagement with an edge of a smart card inserted thereagainst. Contact 64 further includes a termination extremity 64c for termination with a PCB upon which connector 30 is supported.

As illustrated, switches 60 and 62 are biased toward a normally open configuration prior to a card reading operation. Upon insertion of a smart card in a card insertion slot 35 proximate assembly cover 34, an edge of the card engages proximate contact switch 60 and deflects in a card insertion direction along floor 38e as indicated by arrow A. The card edge contacts undulation 64b and thereby brings proximate contact 60 into mechanical and electrical communication with adjacent contact 62. Upon engagement of contacts 60 and 62 with each other, an electrical connection therebetween facilitates transmission of information between the card and the reading unit and further signifies full insertion of the smart card in a proper card reading orientation. Although switches 60 and 62 are shown in a normally open configuration prior to card insertion, it is readily understood that such switches may be biased to a normally closed configuration whereupon contact with proximate contact 60 brings contact 60 out of engagement with adjacent contact 62, thereby effecting a card reading operation. The use of normally open contact switches does not depart from the scope of the present invention.

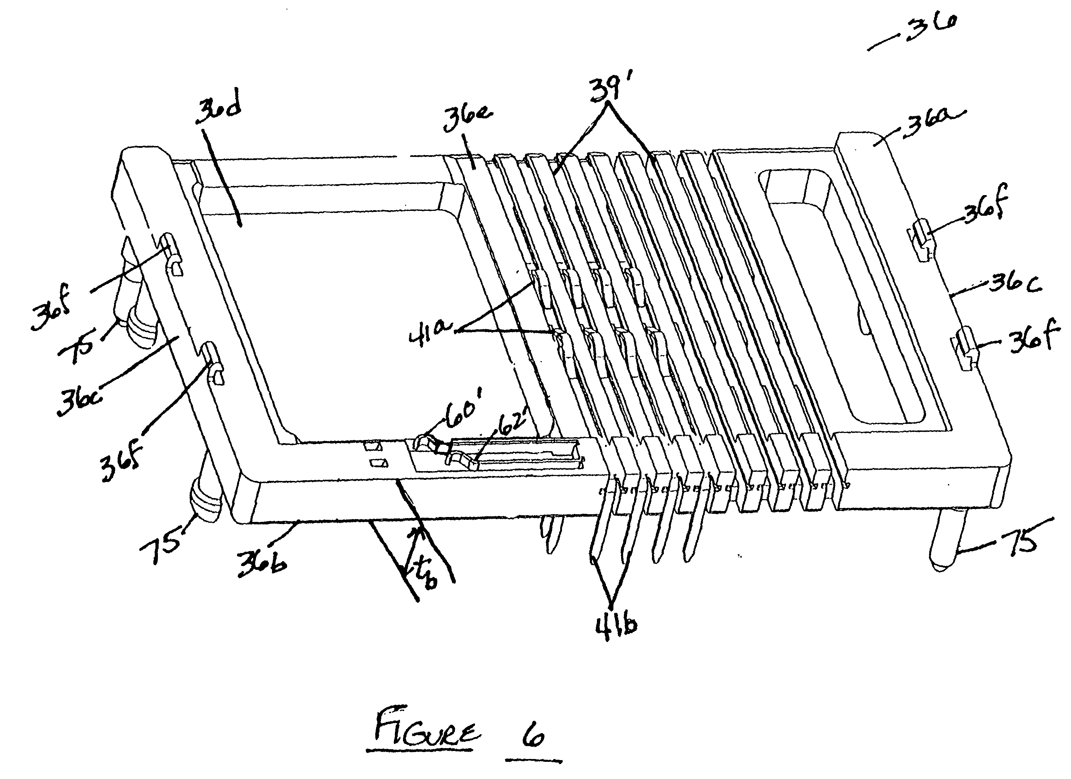

As further shown in Figure 6, connector base 36 is defined similarly to assembly cover 34 and center portion 38 in that base 36 has a substantially planar upper surface 36a opposed by a substantially planar bottom surface 36b and a peripheral side wall 36c coextensive with both surfaces that defines a thickness t_{b}. Side wall 36c defines an indenture 36d having a floor 34c within which a plurality of recesses 39' are provided and within which a correspondingly configured smart card is slidingly received. Recesses 39', like recesses 39 in center portion 38, correspond to a plurality of electrical contacts 41 supported by base 36 in aligned even distribution to effect proper mechanical and electrical engagement with contact pads of a smart card inserted thereagainst. Base 36 also supports a proximate contact switch 60' and an adjacent contact switch 62' therein in either of a normally open or a normally closed configuration. The configuration and operation of switches 60' and 62' arc comparable to that shown in Figure 5A and described hereinabove with respect to switches 60 and 62 supported by center portion 38.

Further referring to Figures 5 and 6, each of center portion 38 and base 36 includes side latches 38f and 36f, respectively, that depend normally from upper surface 38a and upper surface 36a, respectively. Latches 38f interengage corresponding receptacles 34f in assembly cover 34. Similarly, latches 36f interengage corresponding receptacles 38g defined in sidewall 38c of center portion 38 so as to procure a securely stacked connector configuration as shown in Figures 2 and 3. Stacked interengagement of cover 34, center portion 38 and base 36 as illustrated herein is merely an example of one type of configuration that can be implemented to secure these elements to one another. It is therefore understood that other types of retention members can be employed without departing from the scope of the invention.

Connector base 36 may further include one or more securement members 75 protruding normally from bottom surface 36b toward a PCB (not shown) to which connector 30 is attached. Securement members 75 are insertably affixed within a mounting aperture (not shown) in the PCB such that bottom surface 36b lies flush thereagainst. Securement members may alternatively be in the form of an offset wherein the securement member has a planar landing defined at an extremity thereof that enables elevation of connector 30 above the PCB by a predetermined height. In this latter configuration (disclosed in copending European Patent Application No. 1050840 filed on May 5, 2000 and entitled "Improved Smart Card Reader for Elevated Relative to a Printed Circuit Board" and ), a component placement area is defined beneath connector 30 that is of sufficient dimension so that connected board mounted components (not shown) may be mounted to the board beneath connector 30.

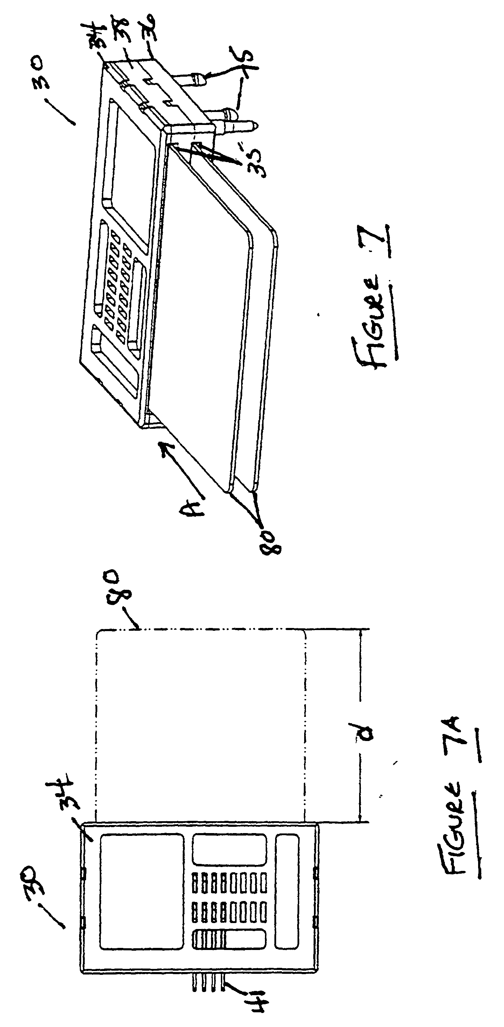

Referring now to Figures 7 and 7A, the operation of the present invention stacked smart card reader assembly can now be described.

Connector 30 is attached to a PCB or other support surface (not shown) by removably attaching securement members 75 thereto. A smart card 80 is inserted into connector 30 with a surface of the card defining the contact pads thereon facing toward deflectable contact extents 41a. Insertion of the card begins by aligning the card within either of upper insertion slot 35a or lower insertion slot 35b and pushing the card in a card insertion direction designated by arrow A. Card insertion ingress 90 (shown in Figure 2) guides card 80 toward a card insertion slot for introduction of card 80 along a card insertion plane defined by one of floors 38e and 36e. Card 80 continues sliding movement toward a rear portion of connector 30 such that contacts 41 contact the surface of the card, and thus the contact pads thereon. Continued sliding movement of the card deflects undulations 41a upward into corresponding recesses 39 and 39' and they are retained therewithin for the duration of a card reading operation. Neither of upper slot 35a nor lower slot 35b may totally receive card 80 therewithin, leaving a portion of card 80 having length d extending therefrom for easy extraction of the card after a card reading operation.

Upon retraction of card 80 from its respective slot, undulations 41a resiliently return to their original resting position within the card insertion plane. It is noted that sliding movement of card 80 during insertion may be limited by either or both of switching contacts 60 and 62 once the card comes into mechanical and electrical engagement with such contacts.

As particularly shown in Figure 7, a second smart card 80 can be simultaneously inserted into connector 30 in either of upper slot 35a or lower slot 35b not already occupied by a first card. As shown and described herein, it is evident that center portion 38 is designed in such a way that one or more center portions 38 may be interengaged with one another, and further with cover 34 and base 36, to accommodate a desired plurality of smart cards in connector 30. Connector 30 can therefore provide card insertion for a pair of smart cards when employed with the three elements shown (i.e., one card insertion slot 35 above center portion 38 and one card insertion slot 35 therebelow), or connector 30 may employ additional center portions 38 so as to provide additional card insertion slots therein for simultaneous connection of a desired plurality of smart cards.

It is evident from the foregoing description that the present invention is useful for various applications wherein preservation of PCB space is allocated a high priority. The present invention does so without compromising valuable packaging areas or sacrificing sufficient electrical communication between the smart card and the PCB. The present invention further confers the ability to utilize the same components for either of a single smart card connector or a multiple smart card connector, thereby introducing significant savings in manufacturing costs and costs associated with storage of multiple connector elements.

Various changes to the foregoing described and shown methods and corresponding structures would now be evident to those skilled in the art. The matter set forth in the foregoing description and accompanying drawings is therefore offered by way of illustration only and not as a limitation. Accordingly, the particularly disclosed scope of the invention is set forth in the following claims.

## Claims

1. At stacked smart card connector assembly (30) for connecting at least one integrated circuit (IC) card having conductive portions thereon to a printed circuit board, said assembly comprising:
an insulative housing (32) including a base (36) that supports a plurality of electrical contacts therein and an assembly cover (34) positioned in overlying spaced parallel relationship therewith, said housing further including a modular center portion (38) attachably positioned between said base and said cover to define at least one card insertion slot (35) that slidingly accommodates insertion of a smart card therewithin.

2. The assembly of claim 1 wherein said housing (32) is fabricated from an insulative plastic.

3. The assembly of claim 1 or claim 2 wherein said center portion (38) defines once said card insertion slot (35) with each of said cover (34) and said base (36).

4. The assembly of any one of claims 1 to 3 wherein said housing defines a card insertion ingress (90) in communication with said card insertion slot being sized and shaped to accept a correspondingly configured smart card therewithin.

5. The assembly of any one of claims 1 to 4 wherein said cover is a generally rectangular member defined by a substantially planar upper surface opposed by a substantially planar bottom surface and a perimetrical side wall coextensive with each of said upper surface and said bottom surface.

6. The assembly of any one of claims 1 to 5 wherein said cover includes a plurality of contact receptacles (34) defined in said wall to enable visual confirmation of correspondingly positioned electrical contacts positioned therebeneath.

7. The assembly of any one of claims 1 to 6 wherein a trough (34e) is defined along a front portion of said side wall that, in combination with said center portion, defines said card insertion ingress upon assembly of said cover and said center portion.

8. The assembly of claim 1 wherein each of said modular center portion and said base is a generally rectangular member having a substantially planar upper surface opposed by a substantially planar bottom surface and a perimetrical side wall coextensive with each of said upper surface and said bottom surface.

9. The assembly of claim 1 or claim 8 wherein each of said center portion and said base supports a plurality of electrical contacts (41) in aligned even distribution to effect proper mechanical and electrical engagement with said conductive portions of said IC card.

10. The assembly of any one of claims 1, 8 and 9 wherein each of said center portion and said base further includes an indenture (36a,38d) having a floor that defines a card insertion plane along which said IC card is slidingly accommodated.

11. The assembly of claim 10 wherein a plurality of recesses (39) are provided in said floor that accommodate receipt of said electrical contacts therein.

12. The assembly of any one of claims 1, 8, 9, 10 and 11 wherein each of said center portion and said base further supports a pair of contact switches (60,62) therein.

13. The assembly of claim 12 wherein said contact switches include a proximate switch (60) which contacts an edge of said IC card upon insertion thereof into said indenture.

14. The assembly of claim 13 where said contact switches further include an adjacent switch (62) that is adjacent said proximate switch.

15. The assembly of any one of claims 12 to 14 wherein said each said contact switch includes an engagement extremity (64a) at which a deflectable undulation (64b) is defined for engagement with an edge of said IC card inserted thereagainst.

16. The assembly of claim 15 wherein each said contact switch further includes a termination extremity (64c) for termination with said printed circuit board.

17. The assembly of any one of claims 12 to 16 wherein said contact switches are biased toward either of a normally open configuration or a normally closed configuration prior to a card reading operation.

18. The assembly of any one of claims 8 to 17 wherein each of said center portion and said base includes side latches (36f,38f) that depend normally from said upper surface.

19. The assembly of any one of claims 8 to 18 wherein said base includes at least one securement member (75) protruding normally from a bottom surface thereof toward said printed circuit board.

20. The assembly of claim 19 wherein said securement member includes a landing defined at an extremity thereof that enables elevation of said assembly above said printed circuit board and defines a component placement area therebeneath.

## Patentansprüche

1. Eine Chipkarten-Verbinderanordnung (30) in geschichteter Bauweise zum Anschließen von mindestens einer IC-Karte mit integrierter Schaltung und mit auf ihr befindlichen leitenden Abschnitten an eine Leiterplatte, umfassend:
ein isolierendes Gehäuse (32) mit einem Boden (36), der in sich mehrere elektrische Kontakte trägt, und einem über ihr und parallel zu diesem angeordneten Anordnungsdeckel (34), wobei das Gehäuse weiter zwischen dem Boden und dem Deckel einen befestigbar angeordneten modularen Mittelabschnitt (38) aufweist zum Ausbilden mindestens eines Karteneinschiebeschlitzes (35), der eine Chipkarte durch Einschieben aufnimmt.

2. Die Anordnung nach Anspruch 1, wobei das Gehäuse (32) aus einem isolierenden Kunststoff besteht.

3. Die Anordnung nach Anspruch 1 oder 2, wobei der Mittelabschnitt (38) mit sowohl dem Deckel (34) als auch dem Boden (36) einmal den Karteneinschiebeschlitz (35) ausbildet.

4. Die Anordnung nach irgendeinem der Ansprüche 1 bis 3, wobei das Gehäuse einen Karteneinführungseinlaß (90) in Verbindung mit dem zur Aufnahme einer entsprechend gestalteten Chipkarte bemessenen und geformten Karteneinschiebeschlitz ausbildet.

5. Die Anordnung nach irgendeinem der Ansprüche 1 bis 4, wobei der Deckel ein im wesentlichen rechteckiges Glied ist, gebildet durch eine im wesentlichen planare Oberseite gegenüber einer im wesentlichen planaren Unterseite und gebildet durch eine rundum laufende Seitenwand, die zusammen mit sowohl der Ober- als auch der Unterseite verläuft.

6. Die Anordnung nach irgendeinem der Ansprüche 1 bis 5, wobei der Deckel eine Vielzahl von in dieser Wand ausgebildeten Kontaktaufnahmen (34) aufweist zum Ermöglichen einer visuellen Bestätigung der darunter liegenden entsprechend angeordneten elektrischen Kontakte.

7. Die Anordnung nach irgendeinem der Ansprüche 1 bis 6, wobei eine Mulde (34e) entlang einem vorderen Abschnitt der Seitenwand ausgebildet ist, der in Kombination mit dem Mittelabschnitt bei Zusammenbau von Deckel und Mittelabschnitt den Karteneinführungseinlaß ausbildet.

8. Die Anordnung nach Anspruch 1, wobei sowohl der modulare Mittelabschnitt wie auch der Boden ein im allgemeinen rechteckiges Glied mit einer im wesentlichen planaren Oberseite gegenüber einer im wesentlichen planaren Unterseite und einer in Umfangsrichtung mit sowohl Ober- als auch Unterseite gleichlaufenden Seitenwand ist.

9. Die Anordnung nach Anspruch 1 oder Anspruch 8, wobei der Mittelabschnitt wie auch der Boden eine Vielzahl von in gleichmäßiger Verteilung ausgerichteten elektrischen Kontakten (41) trägt zum Bewirken einer angemessenen mechanischen und elektrischen Anlage an den leitenden Abschnitten der IC-Karte.

10. Die Anordnung nach irgendeinem der Ansprüche 1, 8 und 9, wobei sowohl der Mittelabschnitt als auch der Boden weiter eine Nut (36d, 38d) mit einem Boden aufweist, der eine Karteneinschiebeebene bildet, entlang der die IC-Karte gleitend aufgenommen wird.

11. Die Anordnung nach Anspruch 10, wobei eine Vielzahl von Aussparungen (39) in dem Boden vorgesehen sind, die in sich die Aufnahme elektrischer Kontakte ermöglichen.

12. Die Anordnung nach irgendeinem der Ansprüche 1, 8, 9, 10 und 11, wobei sowohl der Mittelabschnitt als auch der Boden weiter in sich ein Paar von Kontaktschaltern (60, 62) abstützen.

13. Die Anordnung nach Anspruch 12, wobei die Kontaktschalter einen nahe liegenden Schalter (60) enthalten, der bei Einschieben der IC-Karte in die Nut eine Kante der IC-Karte berührt.

14. Die Anordnung nach Anspruch 13, wobei die Kontaktschalter weiter einen angrenzenden Schalter (62) enthalten, der an den naheliegenden Schalter angrenzt.

15. Die Anordnung nach irgendeinem der Ansprüche 12 bis 14, wobei jeder Kontaktschalter eine äußeres Anlageende (64a) aufweist, an dem eine biegbare Wellung (64b) zur Anlage an einer Kante der gegen sie eingeschobenen IC-Karte ausgebildet ist.

16. Die Anordnung nach Anspruch 15, wobei jeder Kontaktschalter weiter ein äußeres Anschlußende (64c) zum Anschließen an die Leiterplatte aufweist.

17. Die Anordnung nach irgendeinem der Ansprüche 12 bis 16, wobei die Kontaktschalter vor einem Kartenlesevorgang vorgespannt sind in Richtung auf entweder eine normalerweise offene oder eine normalerweise geschlossene Ausgestaltung.

18. Die Anordnung nach irgendeinem der Ansprüche 8 bis 17, wobei sowohl der Mittelabschnitt als auch der Boden Seitenklinken (36f, 38f) aufweisen, die normalerweise von der Oberseite herabhängen.

19. Die Anordnung nach irgendeinem der Ansprüche 8 bis 18, wobei der Boden mindestens ein normalerweise von einer Bodenseite in Richtung auf die Leiterplatte vorstehendes Sicherheitsglied (75) aufweist.

20. Die Anordnung nach Anspruch 19, wobei das Sicherheitsglied einen an einer Extremität ausgebildeten Ansatzpunkt aufweist, der ein Anheben der Anordnung über die Leiterplatte zuläßt und darunter eine Fläche zum Aufsetzen eines Bauteils bildet.

## Revendications

1. Ensemble (30) de connecteurs de cartes à mémoire empilées pour relier au moins une carte à circuits intégrés (CI), sur laquelle se trouvent des parties conductrices, à une carte à circuits imprimés, ledit ensemble comprenant :
un boîtier isolant (32) comprenant une base (36) qui supporte une pluralité de contacts électriques et un couvercle (34) de l'ensemble disposé parallèlement à celle-ci, espacé de celle-ci, la recouvrant, ledit boîtier comprenant, en outre, une partie centrale modulaire (38) placée par fixation entre ladite base et ledit couvercle afin de définir au moins une fente (35) d'introduction de carte qui permet de manière coulissante d'y introduire une carte à mémoire.

2. Ensemble selon la revendication 1, dans lequel ledit boîtier (32) est fabriqué à partir d'une matière plastique isolante.

3. Ensemble selon la revendication 1 ou la revendication 2, dans lequel ladite partie centrale (38) définit une fois ladite fente (35) d'introduction de carte avec ledit couvercle (34) comme avec ladite base (36).

4. Ensemble selon l'une quelconque des revendications 1 à 3, dans lequel ledit boîtier définit une entrée (90) d'introduction de carte en communication avec ladite fente d'introduction de carte qui est dimensionnée et conformée pour accepter une carte à mémoire configurée de manière correspondante.

5. Ensemble selon l'une quelconque des revendications 1 à 4, dans lequel ledit couvercle est un élément généralement rectangulaire défini par une surface supérieure sensiblement plane opposée à une surface inférieure sensiblement plane, et une paroi latérale périphérique coïncidant approximativement avec ladite surface supérieure comme avec ladite surface inférieure.

6. Ensemble selon l'une quelconque des revendications 1 à 5, dans lequel ledit couvercle comprend une pluralité de réceptacles (34d) de contacts définis dans ladite paroi afin de permettre une confirmation visuelle de contacts électriques à emplacements correspondants, placés au-dessous de ceux-ci.

7. Ensemble selon l'une quelconque des revendications 1 à 6, dans lequel une partie creuse (34e) est définie le long d'une partie avant de ladite paroi latérale qui, en combinaison avec ladite partie centrale, définit ladite entrée d'introduction de carte sur l'ensemble dudit couvercle et de ladite partie centrale.

8. Ensemble selon la revendication 1, dans lequel ladite partie centrale modulaire comme ladite base est un élément généralement rectangulaire présentant une surface supérieure sensiblement plane opposée à une surface inférieure sensiblement plane, et une paroi latérale périphérique correspondant approximativement à ladite surface supérieure comme à ladite surface inférieure.

9. Ensemble selon la revendication 1 ou la revendication 8, dans lequel ladite partie centrale comme ladite base supportent une pluralité de contacts électriques (41) répartis uniformément de manière alignée afin de venir en prise mécanique et électrique, de manière appropriée, avec lesdites parties conductrices de ladite carte à CI.

10. Ensemble selon l'une quelconque des revendications 1, 8 et 9, dans lequel ladite partie centrale comme ladite base comportent, en outre, une découpe (36d, 38d) présentant un fond qui définit un plan d'introduction de carte le long duquel ladite carte à CI est reçue de manière coulissante.

11. Ensemble selon la revendication 10, dans lequel plusieurs évidements (39) sont prévus dans ledit fond, lesquels sont adaptés pour recevoir lesdits contacts électriques.

12. Ensemble selon l'une quelconque des revendications 1, 8, 9, 10, et 11, dans lequel ladite partie centrale comme ladite base supportent, en outre, une paire de commutateurs de contact (60, 62).

13. Ensemble selon la revendication 12, dans lequel lesdits commutateurs de contact comprennent un commutateur de proximité (60) qui met en contact un bord de ladite carte à CI lors de son introduction dans ladite découpe.

14. Ensemble selon la revendication 13, dans lequel lesdits commutateurs de contact comprennent, en outre, un commutateur adjacent (62) qui est contigu audit commutateur de proximité.

15. Ensemble selon l'une quelconque des revendications 12 à 14, dans lequel chacun desdits commutateurs de contact comprend une extrémité de prise (64a) à laquelle une ondulation (64b) à même de dévier est définie en vue d'une prise avec un bord de ladite carte à CI insérée contre celle-ci.

16. Ensemble selon la revendication 15, dans lequel chacun desdits commutateurs de contact comprend, en outre, une extrémité terminale (64c) pour former la terminaison avec ladite carte à circuits imprimés.

17. Ensemble selon l'une quelconque des revendications 12 à 16, dans lequel lesdits connecteurs de contact sont sollicités pour avoir, soit une configuration d'ouverture normale, soit une configuration de fermeture normale avant une opération de lecture de carte.

18. Ensemble selon l'une quelconque des revendications 8 à 17, dans lequel ladite partie centrale comme ladite base comportent des cliquets latéraux (36f, 38f) qui dépendent normalement de ladite partie supérieure.

19. Ensemble selon l'une quelconque des revendications 8 à 18, dans lequel ladite base comprend au moins un élément d'assujettissement (75) faisant saillie normalement de sa surface inférieure en direction de ladite carte à circuits imprimés.

20. Ensemble selon la revendication 19, dans lequel ledit élément d'assujettissement comprend une partie de réception définie à une de ses extrémités, qui permet une élévation dudit ensemble au-dessus de ladite carte à circuits imprimés et définit une zone de mise en place de composant au-dessous de celle-ci.
